# EUROPEAN PATENT SPECIFICATION

(11) **EP 4 037 349 B1**
(45) Date of publication and mention of the grant of the patent: **03.04.2024**
(21) Application number: 21154776.5
(22) Date of filing: 02.02.2021
(51) Int. Cl.: H04W 4/16, H04L 65/1016, H04L 65/1076, H04L 65/1089

(54) **A METHOD FOR PROVIDING A VOICE ASSISTANCE FUNCTIONALITY TO END USER BY USING A VOICE CONNECTION ESTABLISHED OVER AN IP-BASED TELECOMMUNICATIONS SYSTEM**
VERFAHREN ZUR BEREITSTELLUNG EINER SPRACHUNTERSTÜTZUNGSFUNKTIONALITÄT AN ENDBENUTZER UNTER VERWENDUNG EINER SPRACHVERBINDUNG, DIE ÜBER EIN IP-BASIERTES TELEKOMMUNIKATIONSSYSTEM HERGESTELLT WIRD
PROCÉDÉ PERMETTANT DE FOURNIR UNE FONCTIONNALITÉ D'AIDE VOCALE À L'UTILISATEUR FINAL AU MOYEN D'UNE CONNEXION VOCALE ÉTABLIE SUR UN SYSTÈME DE TÉLÉCOMMUNICATIONS BASÉ SUR IP

(43) Date of publication of application: 03.08.2022
(73) Proprietor: Deutsche Telekom AG, 53113 Bonn (DE)
(72) Inventor: SIVCHENKO, Dmitry, 64331 Weiterstadt (DE); GÄDE, Sebastian, 53175 Bonn (DE)
(74) Representative: Blumbach · Zinngrebe Patentanwälte PartG mbB

(56) References cited:
- WO-A1-2018/068096
- WO-A1-2020/186499
- US-B2- 10 134 395

## Description

### Technical Field

The present invention relates to a method for providing a voice assistance functionality to end users of a telephone call or a voice connection, which is established over an IP-based telecommunications system, which supports inter alia IP telephony services.

### Background of the Invention

Nowadays the deployment of voice assistance mechanisms increase in both the private customer market and in business areas. In order to provide users voice assistance additional hardware components have to be located on the user premises. For instance, such hardware components may comprise smart speakers like Amazon echo, Google Home, Apple HomePod or MagentaSpeaker. The known smart speakers use specific spoken keywords or wake words entered by a user to initiate the voice assistance functionality. Voice commands spoken by a user are transmitted then by the smart speaker in digital form via the Internet to an application server, which processes the voice command and initiates or performs services and/or tasks associated with the voice command. Audio data received from the application server are output by the smart speaker.

However, the user has to interact directly with the smart speaker to activate its voice assistance functionality and to start voice controlled services like playing selected music songs or querying knowledge bases to get voice information. Therefore, if a user is involved in a telephone call and would like to use a voice assistant, he/she has to interact in parallel with a separately arranged smart speaker.

WO 2018/068096 A1 relates to systems and methods for offering subscription services within a phone call. In particular, described embodiments are directed to systems and methods of routing calls to allow for digital assistant services to be available during a call.

### Summary of the Invention

It is an object of the present invention to provide a method for providing a voice assistance functionality to end users during and within a telephone call, which they are involved in, without the need of implementing separate voice assistance devices like smart speakers and without modifying existing telephony-capable user devices like mobile phones, fixed phones and softphones.

According to a preferred aspect, a voice assistance functionality is implemented in an IP-based telecommunications system supporting telephony services, wherein the IP-based telecommunications system may comprise a first network entity configured to detect a predefined user spoken keyword or wake word transmitted over a voice connection, also referred to as a telephone call, and a second network entity configured to process user spoken voice data including voice commands transmitted over the same voice connection.

The technical problem is solved by the steps of claim 1. Preferred embodiments are set forth in the dependent claims.

### Brief description of the drawings

Some preferred embodiments are now illustrated in connection with the accompanying drawings, wherein
- Figure 1: shows an illustrative block diagram of an exemplary IP-based telecommunications system, in which a voice assistance functionality is implemented, and
- Figures 2a and 2b: show a schematic flow diagram of an exemplary call setup signaling procedure.

### Detailed description of the invention

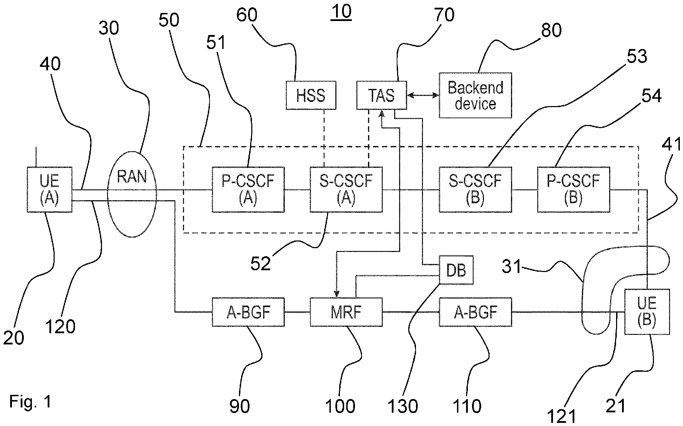

Figure 1 depicts an exemplary IP-based telecommunications system 10, which may comprise a plurality of user devices. However, only a first user device 20 of a user A and a second user device 21 of a user B is depicted for simplicity. Each of the user devices 20 and 21 may be configured to operate inter alia as a telephone. Furthermore, each of the user devices 20 and 21 may be implemented as a telephone or include for example an IP-telephony client and/or an SIP (session initiation protocol) client to place, maintain and terminate telephone calls, i.e. voice connections, established over the IP-based telecommunications system 10. For example, user device 20 may be smart phone, wherein user device 21 may be a computer having a softphone implemented thereon. Alternatively, each of the user devices may comprise a router or a private branch exchange supporting IP telephony services. The session initiation protocol is described for example by Gerd Siegmund in the reference book "Technik der Netze, 6., völlig neu bearbeitete und erweiterte Auflage, 2009 Hiithig Verlag, Chapter 8".

In addition, the exemplary IP-based telecommunications system 10 may further comprises a call session control system 50, which can be implemented as or based on Internet multimedia subsystem (IMS). The Internet Multimedia Subsystem is described in chapter 10 of the above cited reference book. In general, the illustrated call session control system 50 may comprise an IMS core, which supports a plurality of functionalities implemented by physical servers and/or software. The call session control system 50 may comprise a proxy call session control function (P-CSCF) 51 and a serving call session control function (S-CSCF) 52 both associated with the user device 20 of user A, , and a C-CSCF 53 and a P-CSCF 54 both associated with the user device 21 of user B. Each of the control functions may be implemented in separate server devices. In a preferred manner, the control functions 51 and 52 can be implemented on a common server device, whereas the control functions 53 and 54 can be implemented on a separate server device. The call session control system 50 and its control functions 51 to 54 are in particular configured to establish and control multimedia sessions between the user devices 20 and 21 in a known manner.

In the present case, the call session control system 50 and its control functions 51 to 54 are preferably configured to establish and control a voice connection 120, 121, also called a telephone call, over the IP-based telecommunications system 10 between the user device 20 and the user device 21 in such a way, that the voice connection 120, 121 is routed through a first network entity 100 arranged between the first user device 20 and the second user device 21. By doing so, a voice assistance functionality can be provided to the users A and B as explained in detail below.

In the preferred embodiment, the illustrative IP-based telecommunications system 10 comprises a first access network 30, which may be implemented as a radio access network (RAN) as defined for example by the UMTS, LTE or 5G mobile communication standard. The radio access network 30 allows the user device 20, which is for example a SIP-based mobile phone, access to the call session control system 50. In addition, the exemplary IP-based telecommunications system 10 comprises a second access network to allow the user device 21 access to the call session control system 50. In the present case, access network 31 may be a fixed access network defined for example by the DSL standard.

Furthermore, at least one home subscriber server (HSS) 60 communicating with the S-CSCF function 52 may be implemented in the IP-based communications system 10. Only for the sake of simplicity, it is assumed that only a user profile for user A is stored on the HSS 60. It is further assumed, that the user profile for user A includes an information, indicating that user A requests for a voice assistance functionality if initiating a telephone call. It is to be noted, that a similar user profile for user B can be stored on the HSS 60 or on a separate HSS, which user B is associated with. The home subscriber server 60 may belong to the call session control system 50 or to a network belonging to different network provider.

In a known manner, an access border gateway functionality (A-BGF) 90 associated with the user device 20 and a second access border gateway functionality (A-BGF) 110 associated with the user device 21 may be implemented in the IP-based telecommunications system 10. The access border gateway functionalities 90 and 110 are preferably implemented on different server devices, which may belong to the call session control system 50 or to a different network. The access border gateway functionalities 90 and 110 are in particular involved in transmitting payload IP-packets carrying for example voice data and a predetermined wake word between the user devices 20 and 21 over the voice connection 120, 121.

The first network entity 100 can be implemented as a physical server and/or a software module, which may belong to the call session control system 50 or to a different network. Preferably, the first network entity 100 is configured to
i) monitor for example the voice connection 120, 121 established for example between the user devices 20 and 21 to detect a predefined keyword or wake word entered and spoken, respectively, by user A in the user device 20 or by user B in user device 21 and transmitted via the voice connection 120, 121,
ii) record, once the keyword has been detected, voice data entered and spoken, respectively, by user A in the user device 20 or by user B in user device 21 and transmitted over the voice connection 120, 121, if the voice data including a voice command is not transmitted later than as a definable time interval after the transmission of the predetermined keyword. In a preferred embodiment, the first network entity 100 can be further configured transmit directly the recorded voice data to a second network entity 80 which is configured to process the received voice data including a voice command. In particular, the second network entity 80 is configured to process the received voice data to recognize and semantically analyze the voice command include in the voice data and to initiate or perform a service function in dependence of the processed voice data and the voice command, respectively. Service functions may comprise telephony-related service functions, e.g. extending an existing voice connection to a conference call or other service functions like querying data or knowledge bases or generating simple voice answers e.g. the current time. The second network entity 80 can be implemented as software, e.g. a virtual machine, and/or a physical device, which may be a backend device within a backend system. The second network entity 80 may belong to the call session control system 50 or to a different network. Alternatively, the first network entity 100 can be configured to store at a step
iii) the recorded voice data at a storage location, for example on a separate storage system 130 which may comprise a database and/or a file server. In addition, the first network entity 100 maybe configured to perform a media resource function (MRF) as is known from the IP multimedia subsystem. Therefore, network entity 100 can be implemented as a known MRF network device modified by the functions defined at steps i) to iii) as illustrated above.

In addition, the IP-based telecommunication system 10 may further comprise a third network entity 70, which may be implemented as a physical telephony application server (TAS) 70 or as a software component, e.g. a virtual machine, implemented on a physical device. The third network entity 70, shortly called TAS, may belong to the call session control system 50 or to a separate network. The TAS 70 is preferably configured to communicate with the call session control system 50, e.g. with the S-CSCF-function 52 and/or 53, with the first network entity 100 and the database 130 and the HSS 60. It should be noted, that the first network entity 100 and the second network entity 80 and, if available, the TAS 70 participate in providing a voice assistance functionality to users involved in a telephone call, e.g. to the users A and B.

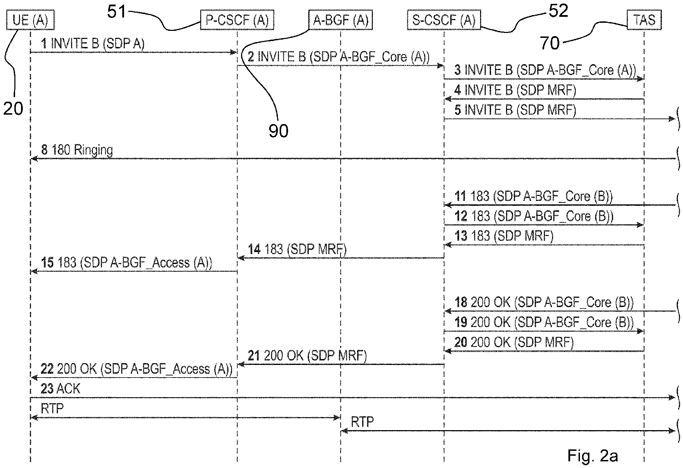

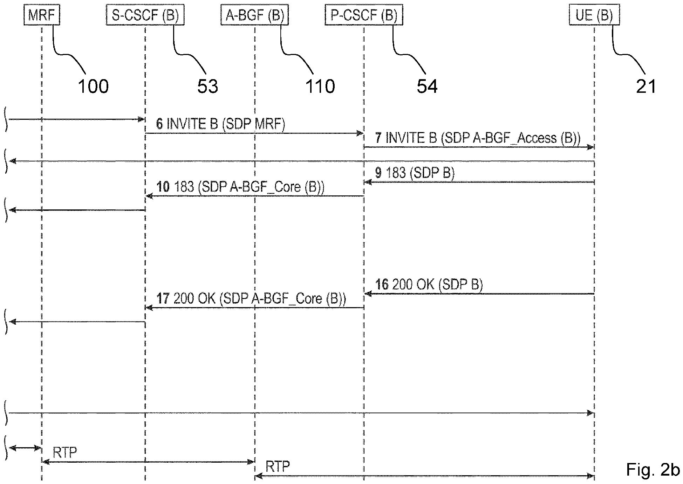

Now, some exemplary scenarios are illustrated in connection with figure 1 and figures 2a and 2b to provide a voice assistance functionality to users A and/or B during and within an existing telephone call 120, 121, also called a voice connection.

### Scenario 1

At first, a voice connection 120, 121 is established over the IP-based telecommunications system 10 between the first user device 20 and the second user device 21 by using an IP-based signaling protocol, e.g. SIP, wherein the established voice connection 120, 121 is routed through the first network entity 100, which is arranged between the user device 20 and the user device 21. It is assumed, that the step of establishing a voice connection is initiated by the user device 20. According to the session initiation protocol SIP call set up messages are transmitted between the user device 20 and the user device 21 via the call session control system 50, which is symbolized in figure 1 by lines 40 and 41. Once the call setup procedure is finished the established voice connection 120, 121 is guided form the user device 20 through the first access network 30, the A-BGF-network entity 90, the first network entity 100, the A-BGF network entity 110 and the second access network 31 to the user device 21.

In order to may use the voice assistance functionality user A now enters a predetermined spoken keyword at its user device 20 and thereafter a voice information including a voice command. In a preferred embodiment, the voice information including a voice command is entered by user A, once an acknowledgment signal is received by the user device 20 from the first network entity 100 indicating that the keyword has been detected by the network entity 100. Therefore, the network entity 100 may be configured, to inform the user device 20 and user A, respectively, about the receipt and detection of the keyword. The user device 20 is preferably configured to convert the spoken keyword and the voice information into voice data and to transmit them in IP-packets over the established voice connection 120, 121 and thus through the first network entity 100. An IP-based transport protocol, e.g. the real-time transport protocol (RTP) can be used to transmit voice data or voice streams over the established voice connection 120, 121. The network entity 100 is configured to monitor the voice connection 120 and 121 and to wait for a predetermined keyword, i.e. the predetermined keyword transmitted by the user device 20. Preferably, the first network entity 100 can activated by the call section control system 50 to monitor the voice connection 120, 121. Once the predetermined keyword is detected by the first network entity 100, the network entity 100 records the voice data including the voice command following the detected keyword. It should be noted, that in dependence of the implementation of the network entity 100, voice data received by the network entity 100 a predefined time period later than the keyword are not recorded.

In the exemplary scenario, the first network entity 100 may be configured to forward the recorded voice data including the voice command directly to the backend device 80. The backend device 80 may be configured to process the received voice data to recognize and semantically analyze the voice command included in the voice data. Next, the backend device 80 may be configured to initiate and/or perform a service function in response to the voice command recognized and interpreted. For example, the backend device 80 may provide in response to the voice command a simple answer indicating for example the current time. Next, the backend-device 80 may be configured to convert the current time information into respective voice data and transmit directly the voice data to the first network entity 100. The first network entity 100 may be configured to play out the received voice data into the voice connection 120, 121. Finally, the voice data including the current time is output acoustically by the user devices 20 and 21 to the users A and B, respectively.

It should be noted, that the backend device 80 may be configured to recognize and semantically analyze a plurality of different voice commands and to initiate and/or perform different service functions and/or tasks in dependence of the plurality of different voice commands to obtain for example any audio data to be transmitted over the voice connection to the user devices 20 and 21 to be output acoustically to the Users A and B, respectively.

### Scenario 2

Now, a further preferred scenario is considered in connection with figures 2a and 2b for providing a voice assistance functionality to users A and/or B during and within an existing telephone call 120, 121 by involving the third network entity 70, i.e. the telephony application server 70. In general, figures 2a and 2a schematically depict a time-based flow diagram, which illustrates an exemplary flow of SIP-call setup messages used to establish the voice connection 120, 121 between the user device 20 and the user device 21, wherein the voice connection 120, 121 is routed through the network entity 100. It is further assumed, that the SIP may use for example the session description protocol (SDP), which is known.

Now, it is assumed that user A of the user device 20 is initiating a setup of a voice connection to user device 21. Therefore, in a known manner, user device 20 generates an invite message, which includes a request for establishment a voice connection between user A of user device 20 and user B of the user device 21. At step 1 the invite message is transmitted to the P-CSCF 51 of the call session control system 50. At step 2, an invite message is forwarded from P-CSCF 51 to S-CSCF 52. This message includes an information that user device 20 uses the A-BGF (A) 90 associated with core A of the call session control system 50. At step 3 the invite message is forwarded to the telephony application server 70. The invite message is modified by the telephony application server 70 by adding an information indicating, that the first network entity 100 is to be switched into the requested voice connection 120, 121. In addition, TAS 70 may be configured to instruct now the first network entity 100 to be prepared to monitor the voice connection 120, 121 once it is established. At step 4, the modified invite message is forwarded from the telephony application server 17 to the call session control system 50, in particular back to the S-SCFC 52. At step 5 the invite message is then forwarded from the S-CSCF 52 to the S-CSCF 53 associated with the user B of the user device 21. At step 6 the respective invite message is forwarded from the S-CSCF 53 to the P-CSCF 54 which is associated with the user device 22. At step 7 the P-CSCF instance 54 forwards a invite message to the user device 21 indicating that user device 20 requests for a voice connection to user device 21. In response to the invite message user device 21 generates a ringing message 180 and forwards it at step 8 to user device 20. At step 9, the signaling message 183 is forwarded from user device 21 to the P-CSCF 54, which in turn forwards at step 10 a signaling message 183 to the S-CSCF 53. At step 11 a signaling message 183 is forwarded from S-SCSCF 53 to the S-CSCF 52 associated with the user device 20. At step 12, the signaling message 183 is forwarded from the S-CSCF 52 to the telephony application server 70. At step 13 the telephony application server 70 forwards a signaling message 183 to the S-CSCF 52 indicating, that first network entity 100 is to be involved in the requested voice connection 120, 121. At step 14 S-CSCF instance 52 forwards the signaling message 183 to the P-CSCF 51 informing this instance that network entity 100 is to be switched into the requested voice connection 120, 121. At step 15 the signaling message 183 is forwarded to the user device 20. At step 16, the user device 21 sends a signaling message 200 OK to its P-CSCF 54, which in turn forwards at step 17 a signaling message 200 OK to the S-CSCF 53. At step 18 a signaling message 200 OK is send from S-CSCF 53 to the S-CSCF. At step 19 the signaling message 200 OK is send to the telephony application server 17. At step 20 the telephony application server 17 transmit a signaling message 200 OK to the S-CSCF 52 indicating that the network entity 100 will be switched into the requested voice connection. At step 21, the S-CSCF 52 forwards the signaling message 200 OK to the P-CSCF 51. At step 22 P-CSCF 51 sends a signaling message 200 OK to the user device 20. At step 23 user device 20 sends an acknowledgment signaling message to the user device 21, which terminates the establishment of the voice connection 120, 121. Now, there exists the voice connection 120, 121 between the user device 20 and the user device 21, wherein the voice connection 120, 121 is routed through the first network entity 100. As depicted in figures 2a and 2b voice data can be now transmitted via the established voice connection 120, 121 using for example the real-time transfer protocol.

Preferably, during the establishment of the voice connection 120, 121 the telephony application server 70 may inform the network entity 100 on a predetermined keyword or a list of predetermined keywords to be used. In addition, the telephony application server 17 may be configured to instruct the network entity 100 to activate the monitoring function so that the network entity 100 is now prepared to monitor the voice connection 120, 121 to detect a predetermined keyword entered at the user device 20 or at the user device 21 and transmitted over the established voice connection 120, 121.

It should be noted, that as shown in figures 2a, and 2b the S-CSCF 52 may trigger the telephony application server 17 to instruct the network entity 100 to start, in particular, monitoring the voice connection 120, 121. According to a preferred implementation, the information to involve the telephony application server 70 can be retrieved by the S-CSCF 52 from the home subscriber server 60. As mentioned above the home subscriber server 60 can store a user profile for user A indicating that a voice assistance functionality should be activated once the user device 20 requests for a voice connection to a called party, for example to the user device 21 of user B. In a similar way, a user profile for user B can be stored on the HSS 60 or a separate HSS indicating that a voice assistance functionality should be activated once the user device 21 requests for a voice connection to a called party, for example to the user device 20 of user A.

Now, the user devices 20 and 21 are connected to each other via the voice connection 120, the voice assistance functionality is activated and the first network entity 100 is monitoring the voice connection 120, 121 and waiting for a predetermined keyword and voice data including voice commands.

In order to may use the voice assistance functionality user A now enters a predetermined spoken keyword at its user device 20 and thereafter a voice information including a voice command. The user device 20 may be configured to convert the keyword into a digital keyword and the voice information into digital voice data, both of which are transmitted over voice connection 120, 121. In a preferred embodiment, the voice information including a voice command is entered by user A only, if an acknowledgment signal is received by the user device 20 from the first network entity 100 indicating that the keyword has been detected by the network entity 100. Therefore, the network entity 100 may be configured, to inform the user device 20 and user A, respectively, about the receipt and detection of the keyword. Once the network device 100, monitoring the voice connection, detects the entered predetermined keyword it records the received voice data entered as the voice information by the user A at the user device 20 and the recorded voice data is stored under control of the network entity 100 at the first storage location. The first storage location may be part of the database 130 or a file server, which the network entity 100 has access to. The network entity 100 is configured to inform the backend device 80 on the first storage location. In response thereto the voice data stored at the first storage location in the database 130 is retrieved by the telephony application server 70, which in turn forwards the retrieved voice data to the backend device 80. It should be noted, that the term "backend" is used to indicate, that voice data transmitted over the voice connection 120, 121 is preferably processed and converted into text at a remote physical server or device instead of a network entity which is switched into the voice connection 120, 121 or terminate the voice connection 120, 121, like the network entity 100 and the user devices 20, 21. It should be noted, that according to a preferred implementation, the TAS 70 knows the addresses of the first network entity 100 and the backend device 80, the backend device knows the address of the TAS 70 and the first network entity 100 knows the address of the TAS 70. Preferably, each address may include the IP-address or domain name and the port number of the respective network entity 70, 80 or 100 to allow communication between them.

In order to may use the voice assistance functionality it is assumed that user A now enters a predetermined spoken keyword at its user device 20 and thereafter a voice information including a voice command. The user device 20 is preferably configured to convert the spoken keyword and the voice information into respective voice data and to transmit them in IP-packets over the established voice connection 120, 121 and thus through the first network entity 100. An IP-based transport protocol, e.g. the real-time transport protocol (RTP) can be used to transmit voice data or voice streams over the established voice connection 120, 121. As illustrated above, the network entity 100 has been activated by the TAS 70 to monitor the voice connection 120 and 121 and to wait for a predetermined keyword, i.e. the predetermined keyword transmitted by the user device 20. Once the predetermined keyword is detected by the first network entity 100, the first network entity 100 informs the telephony application server 70 about this event. In response to that information the TAS 70 instructs the first network entity 100 to record the voice data including a voice command following the detected keyword. After recording the voice data the first network entity 100 stores the recorded voice data for example at a predetermined storage location on the storage system 130, which may comprise a database and/or a file server and informs the TAS 70 about this event and the storage location. Now, the TAS 70 fetches the stored voice data from the database 130 and forward the voice data to the backend device 80.

Alternatively, the voice information including a voice command may be entered by user A not directly after entering the predetermined keyword but only, if an acknowledgment signal is received by the user device 20 from the first network entity 100 indicating that the keyword has been detected by the network entity 100. Therefore, the network entity 100 may be configured, to inform the user device 20 and user A, respectively, about the receipt and detection of the keyword. Once the predetermined keyword is detected by the first network entity 100, the first network entity 100 informs the telephony application server 70 about this event. The TAS 70 may be configured to instruct in response to that information the network entity 100 to
1. transmit an acknowledgment signal via the voice connection to the user device 20, wherein the acknowledgment signal invites the user A to enter the voice information including the voice command,
2. wait for the voice data including the voice command,
3. record the voice data including the voice command, and
4. store the recorded voice data for example at a predetermined storage location on the database 130 or on a file server. Furthermore, the network entity 100 is configured to inform the TAS 70 about recording and storing the voice data and the storage location.

Now, the TAS 70 fetches the stored voice data from the database 130 or the file server and forward the voice data to the backend device 80.

The backend-device 80 is configured to process the voice data including the voice command entered by user A. The processing procedure may include the steps of recognizing the voice command included in the voice data and interpreting or semantically analyzing the voice command and optionally the step converting the voice command into a respective text to be used. Next backend-device 80 initiates a specific service function or a specific task in dependence of the recognized and semantically analyzed voice command.

Now, some exemplary different voice commands, which can be processed by the backend device 80, and some exemplary different service functions or tasks, which can be initiated by the backend device 80 in dependence of these respective voice commands are considered.

First, a voice command is considered which causes the backend device 80 to initiate a service function to provide audio data to be sent to the user devices 20 and 21.

Now it is assumed, that user A wants to know the current time and thus a voice command in form of a question "What time is it?" can be entered by user A, which is forwarded to backend device 80 as illustrated above. The backend-device 80 can be configured to provide the current time of day by itself or to query a respective application server configured to forward the current time of day to the backend-device 80. Next, the backend-device 80 is configured to convert the current time of day into speech data and to transmit the speech data to the telephony application server 70. The TAS 70 may be configured to store the speech data representing the current time preferably at a predefined storage location on the database 130 or a file server and to instruct the first network entity 100 to retrieve the speech data from the database 130 and to transmit the speech data over the voice connection 120, 121 to the user devices 20 and 21. Finally the speech data can then be converted by the user devices 20 and 21 respectively and output acoustically.

Now it is assumed, that for example user A wants to know the name of the current German chancellor and thus a voice command in form of a question "What is the name of the current German chancellor?" can be entered by user A, which is forwarded to backend device 80 as illustrated above. The backend-device 80 can be configured to initiate a specific service function or task in dependence of the respective voice command to provide the current name of the German chancellor. To do this the backend device 80 may be configured to perform the service function which causes the backend device 80 to query a database or knowledge base (not shown) to obtain the name of the current German chancellor. Once the backend device 80 has received the name, it converts the name of the current German chancellor into speech data and transmits the speech data to the telephony application server 70. The TAS 70 may be configured to store the speech data representing the name of the current German chancellor preferably at a predefined storage location on the storage system 130, which may comprise a database and/or a file server and to instruct the first network entity 100 to retrieve the speech data from the storage system 130 and to transmit the speech data over the voice connection 120, 121 to the user devices 20 and 21. Finally the speech data can then be converted by the user devices 20 and 21 respectively and output acoustically. In a similar manner, user A or user B may enter a voice command to request for a specific music song, which can be obtained by the backend device 80 and played out into the voice connection 120, 121 and transmitted to the user devices 20 and 21 as explained above. It should be noted, that the method of finding specific information in databases or in a distributed databases is well known to a persons skilled in the art.

Now, it is assumed that user A wants to extend the current voice connection 120, 121 to a conference call with a certain party. Therefore, an exemplary voice command in the form of "Please setup a conference call to party C" can be entered by user A, which is forwarded to the backend device 80 as illustrated above. The backend-device 80 may be configured to process the voice data including this voice command to recognize and semantically analyze the voice command included therein and initiate a specific service function in dependence of the specific voice command, i.e. to initiate a service function to extend the existing voice connection 120, 121 to a conference call including party C.

For this particular purpose and the example of a conference call the TAS 70 may initiate a so called out-of-the-blue call (known technique) towards party C. The TAS 70 instructs the A-BGF of party C to send all the speech data from the user device of party C to the MRF network entity 100. Additionally, the TAS 70 instructs the network entity 100 to multiplex the voice data of the three users A. B and C in a way that all of them can hear and speak to each other. Upon receiving replies from party C the TAS 70 is able to configure the network entity 100 where to send multiplexed voice data towards party C and its A-BGF, respectively, so that party C can be integrated into the existing call. User A and User B as well as A-BGF 90 and A-BGF 110 continue to send voice data to known destinations, e.g. the network entity 100 so that the conference call is possible in this way. This use case describes a particular example of the conference all, further similar scenarios with call forwarding, call barring etc. can be implemented in the same way with known existing IMS techniques.

Preferably, the backend device 80 may be configured to initiate the conference call service function in response to the recognized voice command by retrieving, e.g. from a respective server, the telephone number of the party C included in the voice command, send the telephone number to the TAS 70 and instructing it to extend the current voice connection 120, 121 to a conference call with party C. The TAS 70 can perform the respective steps in a known manner. With other words: The backend device 80 may involve one or more separate network entities, e.g. the TAS 70 and/or software modules and/or a database including a lookup table of names and its respective telephone numbers, to perform the conference call service function.

The backend device 80 may be further configured to generate a voice answer once the conference call has been established. The voice answer, e. g. "The conference call to party C has been successfully setup" can be converted by the backend device 80 into speech data and transmitted to the telephony application server 70. The TAS 70 may be configured to store the speech data representing the voice answer preferably at a predefined storage location on the storage system 130, which may comprise a database and/or a file server and to instruct the first network entity 100 to retrieve the speech data from the storage system 130 and to transmit the speech data over the voice connection 120, 121 to the user devices 20 and 21. Finally the speech data can then be converted by the user devices 20 and 21 respectively and output acoustically.

## Claims

1. A method for providing a voice assistance functionality to end users (A, B) by using a voice connection (120, 121) established over an IP-based telecommunications system (10), which comprises a first network entity (100) configured to detect a predetermined keyword, a second network entity (80) configured to process voice data including a voice command and plurality of user devices (20, 21), wherein the first network entity (100) is configured to perform at least one media resource function, MRF, the method comprising the following steps:
a)
- Transmitting a call setup message from a first user device (20) to a call session control system (50), the call setup message including a request for establishing a voice connection (120, 121) between the first user device (20) and at least one second user device (21);
- Forwarding the call setup message to a third network entity (70), wherein the third network entity (70) is a telephony application server, TAS;
- Modifying, by the third network entity (70), the call setup message by adding an information indicating, that the first network entity (100) is to be switched into the requested voice connection (120, 121);
- Forwarding the modified call setup message from the third network entity (70) to the call session control system (50);
- Forwarding a call setup message from the call session control system (50) to the at least one second user device (21); and
- Establishing, under control of a call session control system (50), the voice connection (120, 121) over the IP-based telecommunications system (10) between the first user device (20) and the at least one second user device (21) by using as an IP-based signaling protocol the Session Initiation Protocol, SIP, wherein the voice connection (120, 121) is routed through the first network entity (100) arranged between the first user device (20) and the at least one second user device (21);
b) Transmitting, by the first user device (20) or the at least one second user device (21), a predetermined keyword and thereafter voice data including a voice command over the voice connection (120, 121) established at step a) using an IP-based transport protocol;
c) Monitoring, by the first network entity (100), the voice connection (120, 121) established at step a) to detect the predetermined keyword transmitted at step b);
d) if the predetermined keyword is detected at
step c), then recording the voice data transmitted at step b);
e) Transmitting the recorded voice data including the voice command to the second network entity (80); and
f) Processing, by the second network entity (80), the voice data received at step e).

2. A method for providing a voice assistance functionality to end users (A, B) by using a voice connection (120, 121) established over an IP-based telecommunications system (10), which comprises a first network entity (100) configured to detect a predetermined keyword, a second network entity (80) configured to process voice data including a voice command and plurality of user devices (20, 21), wherein the first network entity (100) is configured to perform at least one media resource function, MRF, the method comprising the following steps:
a)
- Transmitting a call setup message from a first user device (20) to a call session control system (50), the call setup message including a request for establishing a voice connection (120, 121) between the first user device (20) and at least one second user device (21);
- Forwarding the call setup message to a third network entity (70), wherein the third network entity (70) is a telephony application server, TAS;
- Modifying, by the third network entity (70), the call setup message by adding an information indicating, that the first network entity (100) is to be switched into the requested voice connection (120, 121);
- Forwarding the modified call setup message from the third network entity (70) to the call session control system (50);
- Forwarding a call setup message from the call session control system (50) to the at least one second user device (21); and
- Establishing, under control of a call session control system (50), the voice connection (120, 121) over the IP-based telecommunications system (10) between the first user device (20) and the at least one second user device (21) by using as an IP-based signaling protocol the Session Initiation Protocol, SIP,
wherein the voice connection (120, 121) is routed through the first network entity (100) arranged between the first user device (20) and the at least one second user device (21);
b) Transmitting, by the first user device (20) or the at least one second user device (21), a predetermined keyword over the voice connection (120, 121) established at step a) using an IP-based transport protocol;
c) Monitoring, by the first network entity (100), the voice connection (120, 121) established at step a) to detect the predetermined keyword transmitted at step b);
d1) if the predetermined keyword is detected at step c), then transmitting, by the first network entity (100), an acknowledgment signal indicating that the predetermined keyword has been detected via the voice connection (120), 121) established at step a) to the first user device (20) and the at least one second user device (21),
d2) in response to the acknowledgment signal transmitting, by the user device (20, 21) which has transmitted the predetermined keyword at step b), voice data including a voice command over the voice connection (120, 121) established at step a) using an IP-based transport protocol;
d3) recording, by the first network entity (100), the voice data transmitted at step d2));
e) Transmitting the recorded voice data including the voice command to the second network entity (80); and
f) Processing, by the second network entity (80), the voice data received at step e).

3. The method of claim 1 or 2,
wherein step f) comprises the step of processing, by the second network entity (80), the voice data received at step e) to recognize and semantically analyze the voice command included therein, and/or the method further comprising a step g) for initiating and/or performing, by the second network entity (80), a service function in response to the voice command processed at step f).

4. The method of claim 1,
comprising the steps of
informing, by the third network entity (70), the first network entity (100) on the predetermined keyword to be used; and
- instructing, by the third network entity (70), the first network entity (100) to start performing step c).

5. The method of claim 4,
wherein step d) comprises the steps of
- storing, under control of the first network entity (100), the recorded voice data at a first storage location (130); and
- informing, by the first network entity (100), the third network entity (70) on the first storage location;
wherein step e) comprises the steps of
- retrieving, by the third network entity (70), the voice data stored at the first storage location; and
- forwarding the retrieved voice data from the third network entity (70) to the second network entity (80).

6. The method of any one of the preceding claims in connection with claim 3, wherein step g) comprises the steps of
- providing, at the second network entity (80), audio data in response to the voice command processed at step f);
- transmitting the audio data to the first network entity (100), and
- forwarding, by the first network entity (100), the audio data over the voice connection (120, 121), established at step a), to the first user device (20) and/or to the at least one second user device (21).

7. The method of claim 6,
wherein the step of providing, at the second network entity, audio data in response to the voice command processed at step f) further comprises the steps of
retrieving, by the second network device (80), information stored on a database in response to the voice command processed at step f); and
converting, by the second network device (80), the information retrieved from the database into audio data.

8. The method of claim 6 or 7,
wherein the step of transmitting the audio data to the first network entity (100) comprises the steps of
- transmitting the audio data from the second network entity (80) to the third network entity (70),
- storing, under control of the third network entity (70), the audio data at a second storage location; and
- instructing, by the third network entity (70), the first network entity (100) to retrieve the audio data stored on the second storage location.

9. The method of any one of the claims 1 to 6 in connection with claim 3,
wherein step g) comprises the step of
initiating, by the second network entity (80), a service function in response to the voice command recognized at step f) to setup of conference session between the first, the at least one second and at least a third use device (20, 21).

10. The method of any one of the preceding claims,
wherein the IP-based transport protocol is a real-time transport protocol, RTP,
and the call session control system (50) is the IP Multimedia System, IMS,

11. The method of any of the preceding claims,
wherein the second network entity (80) is implemented in a backend-system.

## Patentansprüche

1. Verfahren zum Bereitstellen einer Sprachassistenzfunktionalität für Endbenutzer (A, B) unter Verwendung einer Sprachverbindung (120, 121), die über ein IP-basiertes Telekommunikationssystem (10) aufgebaut wird, das eine erste Netzwerkeinheit (100), die so konfiguriert ist, dass sie ein vorbestimmtes Schlüsselwort erfasst, eine zweite Netzwerkeinheit (80), die so konfiguriert ist, dass sie Sprachdaten, die einen Sprachbefehl enthalten, verarbeitet, und eine Vielzahl von Benutzergeräten (20, 21) umfasst, wobei die erste Netzwerkeinheit (100) so konfiguriert ist, dass sie mindestens eine Medienressourcenfunktion, MRF, ausführt, wobei das Verfahren die folgenden Schritte umfasst:
a)
- Übertragen einer Rufaufbaunachricht von einem ersten Benutzergerät (20) an ein Anrufsitzungssteuersystem (50), wobei die Rufaufbaunachricht eine Anforderung zum Aufbau einer Sprachverbindung (120, 121) zwischen dem ersten Benutzergerät (20) und mindestens einem zweiten Benutzergerät (21) enthält;
- Weiterleiten der Rufaufbaunachricht an eine dritte Netzwerkeinheit (70), wobei die dritte Netzwerkeinheit (70) ein Telefonieanwendungsserver, TAS, ist; -
Modifizieren der Rufaufbaunachricht durch die dritte Netzwerkeinheit (70) durch Hinzufügen einer Information, die anzeigt, dass die erste Netzwerkeinheit (100) in die angeforderte Sprachverbindung (120, 121) geschaltet werden soll;
- Weiterleiten der modifizierten Rufaufbaunachricht von der dritten Netzwerkeinheit (70) an das Anrufsitzungssteuersystem (50);
- Weiterleiten einer Rufaufbaunachricht von dem Anrufsitzungssteuersystem (50) an das mindestens eine zweite Benutzergerät (21); und
- Aufbauen der Sprachverbindung (120, 121) über das IP-basierte Telekommunikationssystem (10) zwischen dem ersten Teilnehmergerät (20) und dem mindestens einen zweiten Teilnehmergerät (21) unter Steuerung eines Anrufsitzungs-Steuerungssystems (50) unter Verwendung des Session Initiation Protocol, SIP, als IP-basiertes Signalisierungsprotokoll, wobei die Sprachverbindung (120, 121) durch die zwischen dem ersten Benutzergerät (20) und dem mindestens einen zweiten Benutzergerät (21) angeordnete erste Netzeinheit (100) geleitet wird;
b) Übertragen eines vorbestimmten Schlüsselworts und danach von Sprachdaten, die einen Sprachbefehl enthalten, durch die erste Benutzervorrichtung (20) oder die mindestens eine zweite Benutzervorrichtung (21) über die in Schritt a) aufgebaute Sprachverbindung (120, 121) unter Verwendung eines IP-basierten Transportprotokolls;
c) Überwachen der in Schritt a) aufgebauten Sprachverbindung (120, 121) durch die erste Netzwerkeinheit (100), um das in Schritt b) übertragene vorbestimmte Schlüsselwort zu erfassen;
d) wenn das vorbestimmte Schlüsselwort in Schritt c) detektiert wird, dann Aufzeichnen der in Schritt b) übertragenen Sprachdaten;
e) Übertragen der aufgezeichneten Sprachdaten, die den Sprachbefehl enthalten, an die zweite Netzwerkeinheit (80); und
f) Verarbeiten der in Schritt e) empfangenen Sprachdaten durch die zweite Netzwerkeinheit (80).

2. Verfahren zum Bereitstellen einer Sprachassistenzfunktionalität für Endbenutzer (A, B) unter Verwendung einer Sprachverbindung (120, 121), die über ein IP-basiertes Telekommunikationssystem (10) aufgebaut wird, das eine erste Netzwerkeinheit (100), die so konfiguriert ist, dass sie ein vorbestimmtes Schlüsselwort erfasst, eine zweite Netzwerkeinheit (80), die so konfiguriert ist, dass sie Sprachdaten, die einen Sprachbefehl enthalten verarbeitet, und eine Vielzahl von Benutzergeräten (20, 21) umfasst, wobei die erste Netzwerkeinheit (100) so konfiguriert ist, dass sie mindestens eine Medienressourcenfunktion, MRF, ausführt, wobei das Verfahren die folgenden Schritte umfasst:
a)
- Übertragen einer Rufaufbaunachricht von einem ersten Benutzergerät (20) an ein Anrufsitzungssteuerungssystem (50), wobei die Rufaufbaunachricht eine Anforderung zum Aufbau einer Sprachverbindung (120, 121) zwischen dem ersten Benutzergerät (20) und mindestens einem zweiten Benutzergerät (21) enthält; -
Weiterleiten der Rufaufbaunachricht an eine dritte Netzwerkeinheit (70), wobei die dritte Netzwerkeinheit (70) ein Telefonieanwendungsserver, TAS, ist;
- Modifizieren der Rufaufbaunachricht durch die dritte Netzwerkeinheit (70) durch Hinzufügen einer Information, die anzeigt, dass die erste Netzwerkeinheit (100) in die angeforderte Sprachverbindung (120, 121) geschaltet werden soll;
- Weiterleiten der modifizierten Rufaufbaunachricht von der dritten Netzwerkeinheit (70) an das Anrufsitzungssteuerungssystem (50);
- Weiterleiten einer Rufaufbaunachricht von dem Anrufsitzungssteuerungssystem (50) an das mindestens eine zweite Benutzergerät (21); und
- Aufbauen der Sprachverbindung (120, 121) über das IP-basierte Telekommunikationssystem (10) zwischen dem ersten Benutzergerät (20) und dem mindestens einen zweiten Benutzergerät (21) unter Steuerung eines Anrufsitzungs-Steuerungssystems (50) unter Verwendung des Session Initiation Protocol, SIP, als IP-basiertes Signalisierungsprotokoll, wobei die Sprachverbindung (120, 121) durch die zwischen dem ersten Benutzergerät (20) und dem mindestens einen zweiten Benutzergerät (21) angeordnete erste Netzeinheit (100) geleitet wird;
b) Übertragen eines vorbestimmten Schlüsselworts durch das erste Benutzergerät (20) oder das mindestens eine zweite Benutzergerät (21) über die in Schritt a) aufgebaute Sprachverbindung (120, 121) unter Verwendung eines IP-basierten Transportprotokolls;
c) Überwachen der in Schritt a) aufgebauten Sprachverbindung (120, 121) durch die erste Netzwerkeinheit (100), um das in Schritt b) übertragene vorbestimmte Schlüsselwort zu erkennen;
d1) wenn das vorbestimmte Schlüsselwort in Schritt c) detektiert wird, dann Übertragen eines Bestätigungssignals, das anzeigt, dass das vorbestimmte Schlüsselwort über die in Schritt a) aufgebaute Sprachverbindung (120, 121) detektiert wurde, durch die erste Netzwerkentität (100) an das erste Benutzergerät (20) und das mindestens eine zweite Benutzergerät (21),
d2) unter Ansprechen auf das Bestätigungssignal Übertragen von Sprachdaten, die einen Sprachbefehl enthalten, durch das Benutzergerät (20, 21), das das vorbestimmte Schlüsselwort in Schritt b) übertragen hat, über die in Schritt a) aufgebaute Sprachverbindung (120, 121) unter Verwendung eines IP-basierten Transportprotokolls;
d3) Aufzeichnen der in Schritt d2) übertragenen Sprachdaten durch die erste Netzwerkeinheit (100);
e) Übertragen der aufgezeichneten Sprachdaten, die den Sprachbefehl enthalten, an die zweite Netzwerkeinheit (80); und
f) Verarbeiten der in Schritt e) empfangenen Sprachdaten durch die zweite Netzwerkeinheit (80).

3. Verfahren nach Anspruch 1 oder 2,
wobei Schritt f) den Schritt des Verarbeitens der in Schritt e) empfangenen Sprachdaten durch die zweite Netzwerkeinheit (80) umfasst, um den darin enthaltenen Sprachbefehl zu erkennen und semantisch zu analysieren, und/oder das Verfahren ferner einen Schritt g) zum Initiieren und/oder Ausführen einer Dienstfunktion durch die zweite Netzwerkeinheit (80) unter Ansprechen auf den in Schritt f) verarbeiteten Sprachbefehl umfasst.

4. Verfahren nach Anspruch 1, das die Schritte umfasst:
- Informieren der ersten Netzwerkeinheit (100) durch die dritte Netzwerkeinheit (70) über das zu verwendende vorbestimmte Schlüsselwort; und
- Anweisen der ersten Netzwerkeinheit (100) durch die dritte Netzwerkeinheit (70), mit der Durchführung von Schritt c) zu beginnen.

5. Verfahren nach Anspruch 4,
wobei Schritt d) die Schritte umfasst:
- Speichern der aufgezeichneten Sprachdaten an einem ersten Speicherort (130) unter der Steuerung der ersten Netzwerkeinheit (100); und
- Informieren der dritten Netzwerkeinheit (70) über den ersten Speicherort durch die erste Netzwerkeinheit (100);
wobei Schritt e) die folgenden Schritte umfasst:
- Abrufen der am ersten Speicherort gespeicherten Sprachdaten durch die dritte Netzwerkeinheit (70); und
- Weiterleiten der abgerufenen Sprachdaten von der dritten Netzwerkeinheit (70) an die zweite Netzwerkeinheit (80).

6. Verfahren nach einem der vorstehenden Ansprüche in Verbindung mit Anspruch 3,
wobei Schritt g) die folgenden Schritte umfasst:
- Bereitstellen von Audiodaten an der zweiten Netzwerkeinheit (80) unter Ansprechen auf den in Schritt f) verarbeiteten Sprachbefehl;
- Übertragen der Audiodaten an die erste Netzwerkeinheit (100); und
- Weiterleiten der Audiodaten durch die erste Netzwerkeinheit (100) über die in Schritt a) aufgebaute Sprachverbindung (120, 121) an das erste Benutzergerät (20) und/oder an das mindestens eine zweite Benutzergerät (21).

7. Verfahren nach Anspruch 6,
wobei der Schritt des Bereitstellens von Audiodaten an der zweiten Netzwerkeinheit unter Ansprechen auf den in Schritt f) verarbeiteten Sprachbefehl ferner die folgenden Schritte umfasst:
Abrufen von in einer Datenbank gespeicherten Informationen durch die zweite Netzwerkvorrichtung (80) unter Ansprechen auf den in Schritt f) verarbeiteten Sprachbefehl; und
Umwandeln der aus der Datenbank abgerufenen Informationen in Audiodaten durch die zweite Netzwerkvorrichtung (80).

8. Verfahren nach Anspruch 6 oder 7,
wobei der Schritt des Übertragens der Audiodaten an die erste Netzwerkeinheit (100) die folgenden Schritte umfasst:
- Übertragen der Audiodaten von der zweiten Netzwerkeinheit (80) an die dritte Netzwerkeinheit (70),
- Speichern der Audiodaten unter der Kontrolle der dritten Netzwerkeinheit (70) an einem zweiten Speicherort; und
- Anweisen der ersten Netzwerkeinheit (100) durch die dritte Netzwerkeinheit (70), die an dem zweiten Speicherort gespeicherten Audiodaten abzurufen.

9. Verfahren nach einem der Ansprüche 1 bis 6 in Verbindung mit Anspruch 3, wobei Schritt g) den Schritt des Initiierens einer Dienstfunktion durch die zweite Netzwerkeinheit (80) unter Ansprechen auf den in Schritt f) erkannten Sprachbefehl zum Aufbau einer Konferenzsitzung zwischen dem ersten, dem mindestens einen zweiten und mindestens einem dritten Nutzungsgerät (20, 21) umfasst.

10. Verfahren nach einem der vorhergehenden Ansprüche,
wobei das IP-basierte Transportprotokoll ein Echtzeit-Transportprotokoll, RTP, ist und das Anrufsitzungssteuerungssystem (50) das IP-Multimedia-System, IMS, ist.

11. Verfahren nach einem der vorhergehenden Ansprüche,
wobei die zweite Netzeinheit (80) in einem Backend-System implementiert ist.

## Revendications

1. Procédé pour fournir une fonctionnalité d'assistance vocale à des utilisateurs finaux (A, B) en utilisant une connexion vocale (120, 121) établie sur un système de télécommunications IP (10), qui comprend une première entité de réseau (100) configurée pour détecter un mot-clé prédéterminé, une deuxième entité de réseau (80) configurée pour traiter des données vocales comportant une commande vocale et une pluralité de dispositifs utilisateur (20, 21), dans lequel la première entité de réseau (100) est configurée pour réaliser au moins une fonction ressource multimédia, MRF, le procédé comprenant les étapes suivantes :
a)
- la transmission d'un message d'établissement d'appel d'un premier dispositif utilisateur (20) à un système de contrôle de session d'appel (50), le message d'établissement d'appel comportant une demande pour établir une connexion vocale (120, 121) entre le premier dispositif utilisateur (20) et au moins un deuxième dispositif utilisateur (21) ;
- l'envoi du message d'établissement d'appel à une troisième entité de réseau (70), dans lequel la troisième entité de réseau (70) est un serveur d'application de téléphonie, TAS ;
- la modification, par la troisième entité de réseau (70), du message d'établissement d'appel en ajoutant une information indiquant que la première entité de réseau (100) doit être commutée dans la connexion vocale (120, 121) demandée ;
- l'envoi du message d'établissement d'appel modifié de la troisième entité de réseau (70) au système de contrôle de session d'appel (50) ;
- l'envoi d'un message d'établissement d'appel du système de contrôle de session d'appel (50) à l'au moins un deuxième dispositif utilisateur (21) ; et
- l'établissement, sous le contrôle d'un système de contrôle de session d'appel (50), de la connexion vocale (120, 121) sur le système de télécommunications IP (10) entre le premier dispositif utilisateur (20) et l'au moins un deuxième dispositif utilisateur (21) en utilisant comme protocole de signalisation IP le protocole d'ouverture de session, SIP, dans lequel la connexion vocale (120, 121) est acheminée par l'intermédiaire de la première entité de réseau (100) agencée entre le premier dispositif utilisateur (20) et l'au moins un deuxième dispositif utilisateur (21) ;
b) la transmission, par le premier dispositif utilisateur (20) ou l'au moins un deuxième dispositif utilisateur (21), d'un mot-clé prédéterminé et par la suite de données vocales comportant une commande vocale sur la connexion vocale (120, 121) établie à l'étape a) à l'aide d'un protocole de transport IP ;
c) la surveillance, par la première entité de réseau (100), de la connexion vocale (120, 121) établie à l'étape a) pour détecter le mot-clé prédéterminé transmis à l'étape b) ;
d) si le mot-clé prédéterminé est détecté à l'étape c), l'enregistrement des données vocales transmises à l'étape b) ;
e) la transmission des données vocales enregistrées comportant la commande vocale à la deuxième entité de réseau (80) ; et
f) le traitement, par la deuxième entité de réseau (80), des données vocales reçues à l'étape e).

2. Procédé pour fournir une fonctionnalité d'assistance vocale à des utilisateurs finaux (A, B) en utilisant une connexion vocale (120, 121) établie sur un système de télécommunications IP (10), qui comprend une première entité de réseau (100) configurée pour détecter un mot-clé prédéterminé, une deuxième entité de réseau (80) configurée pour traiter des données vocales comportant une commande vocale et une pluralité de dispositifs utilisateur (20, 21), dans lequel la première entité de réseau (100) est configurée pour réaliser au moins une fonction ressource multimédia, MRF, le procédé comprenant les étapes suivantes :
a)
- la transmission d'un message d'établissement d'appel d'un premier dispositif utilisateur (20) à un système de contrôle de session d'appel (50), le message d'établissement d'appel comportant une demande pour établir une connexion vocale (120, 121) entre le premier dispositif utilisateur (20) et au moins un deuxième dispositif utilisateur (21) ;
- l'envoi du message d'établissement d'appel à une troisième entité de réseau (70), dans lequel la troisième entité de réseau (70) est un serveur d'application de téléphonie, TAS ;
- la modification, par la troisième entité de réseau (70), du message d'établissement d'appel en ajoutant une information indiquant que la première entité de réseau (100) doit être commutée dans la connexion vocale (120, 121) demandée ;
- l'envoi du message d'établissement d'appel modifié de la troisième entité de réseau (70) au système de contrôle de session d'appel (50) ;
- l'envoi d'un message d'établissement d'appel du système de contrôle de session d'appel (50) à l'au moins un deuxième dispositif utilisateur (21) ; et
- l'établissement, sous le contrôle d'un système de contrôle de session d'appel (50), de la connexion vocale (120, 121) sur le système de télécommunications IP (10) entre le premier dispositif utilisateur (20) et l'au moins un deuxième dispositif utilisateur (21) en utilisant comme protocole de signalisation IP le protocole d'ouverture de session, SIP, dans lequel la connexion vocale (120, 121) est acheminée par l'intermédiaire de la première entité de réseau (100) agencée entre le premier dispositif utilisateur (20) et l'au moins un deuxième dispositif utilisateur (21) ;
b) la transmission, par le premier dispositif utilisateur (20) ou l'au moins un deuxième dispositif utilisateur (21), d'un mot-clé prédéterminé sur la connexion vocale (120, 121) établie à l'étape a) à l'aide d'un protocole de transport IP ;
c) la surveillance, par la première entité de réseau (100), de la connexion vocale (120, 121) établie à l'étape a) pour détecter le mot-clé prédéterminé transmis à l'étape b) ;
d1) si le mot-clé prédéterminé est détecté à l'étape c), la transmission, par la première entité de réseau (100), d'un signal d'accusé de réception indiquant que le mot-clé prédéterminé a été détecté via la connexion vocale (120, 121) établie à l'étape a) au premier dispositif utilisateur (20) et à l'au moins un deuxième dispositif utilisateur (21),
d2) en réponse au signal d'accusé de réception, la transmission, par le dispositif utilisateur (20, 21) qui a transmis le mot-clé prédéterminé à l'étape b), de données vocales comportant une commande vocale sur la connexion vocale (120, 121) établie à l'étape a) à l'aide d'un protocole de transport IP ;
d3) l'enregistrement, par la première entité de réseau (100), des données vocales transmises à l'étape d2) ;
e) la transmission des données vocales enregistrées comportant la commande vocale à la deuxième entité de réseau (80) ; et
f) le traitement, par la deuxième entité de réseau (80), des données vocales reçues à l'étape e).

3. Procédé selon la revendication 1 ou 2,
dans lequel l'étape f) comprend l'étape consistant à traiter, par la deuxième entité de réseau (80), les données vocales reçues à l'étape e) pour reconnaître et analyser sur le plan de la sémantique la commande vocale comprise dans celles-ci, et/ou le procédé comprenant en outre une étape g) pour amorcer et/ou réaliser, par la deuxième entité de réseau (80), une fonction de service en réponse à la commande vocale traitée à l'étape f).

4. Procédé selon la revendication 1,
comprenant les étapes consistant à
- informer, par la troisième entité de réseau (70), la première entité de réseau (100) du mot-clé prédéterminé devant être utilisé ; et
- donner l'ordre, par la troisième entité de réseau (70), à la première entité de réseau (100) de commencer à réaliser l'étape c).

5. Procédé selon la revendication 4,
dans lequel l'étape d) comprend les étapes consistant à
- stocker, sous le contrôle de la première entité de réseau (100), les données vocales enregistrées à un premier emplacement de stockage (130) ; et
- informer, par la première entité de réseau (100), la troisième entité de réseau (70) du premier emplacement de stockage ;
dans lequel l'étape e) comprend les étapes consistant à
- récupérer, par la troisième entité de réseau (70), les données vocales stockées au premier emplacement de stockage ; et
- envoyer les données vocales récupérées de la troisième entité de réseau (70) à la deuxième entité de réseau (80).

6. Procédé selon l'une quelconque des revendications précédentes en lien avec la revendication 3,
dans lequel l'étape g) comprend les étapes consistant à
- fournir, au niveau de la deuxième entité de réseau (80), des données audio en réponse à la commande vocale traitée à l'étape f) ;
- transmettre les données audio à la première entité de réseau (100), et
- envoyer, par la première entité de réseau (100), les données audio sur la connexion vocale (120, 121), établie à l'étape a), au premier dispositif utilisateur (20) et/ou à l'au moins un deuxième dispositif utilisateur (21).

7. Procédé selon la revendication 6,
dans lequel l'étape consistant à fournir, au niveau de la deuxième entité de réseau, des données audio en réponse à la commande vocale traitée à l'étape f) comprend en outre les étapes consistant à :
récupérer, par le deuxième dispositif de réseau (80), des informations stockées sur une base de données en réponse à la commande vocale traitée à l'étape f) ; et
convertir, par le deuxième dispositif de réseau (80), les informations récupérées à partir de la base de données en données audio.

8. Procédé selon la revendication 6 ou 7,
dans lequel l'étape consistant à transmettre les données audio à la première entité de réseau (100) comprend les étapes consistant à
- transmettre les données audio de la deuxième entité de réseau (80) à la troisième entité de réseau (70),
- stocker, sous le contrôle de la troisième entité de réseau (70), les données audio à un deuxième emplacement de stockage ; et
- donner l'ordre, par la troisième entité de réseau (70), à la première entité de réseau (100) de récupérer les données audio stockées sur le deuxième emplacement de stockage.

9. Procédé selon l'une quelconque des revendications 1 à 6 en lien avec la revendication 3,
dans lequel l'étape g) comprend l'étape consistant à
amorcer, par la deuxième entité de réseau (80), une fonction de service en réponse à la commande vocale reconnue à l'étape f) pour l'établissement d'une session de conférence entre le premier, l'au moins un deuxième et au moins un troisième dispositif d'utilisation (20, 21).

10. Procédé selon l'une quelconque des revendications précédentes,
dans lequel le protocole de transport IP est un protocole de transport en temps réel, RTP, et le système de contrôle de session d'appel (50) est le système multimédia IP, IMS.

11. Procédé selon l'une quelconque des revendications précédentes,
dans lequel la deuxième entité de réseau (80) est mise en œuvre dans un système dorsal.
